# EUROPEAN PATENT APPLICATION

(11) **EP 4 401 276 A2**
(43) Date of publication of application: **17.07.2024**
(21) Application number: 24151593.1
(22) Date of filing: 12.01.2024
(51) Int. Cl.: H02J 7/00, H02J 7/34

(54) **PRE-CHARGING AND CONNECTING AN ENERGY STORAGE SYSTEM**

(30) Priority: 12.01.2023 US 202363479625 P
(71) Applicant: Solaredge Technologies Ltd., Herzeliya 4673335 (IL)
(72) Inventor: BADASH, Roni, 4673335 Herzeliya (IL); ROMAN, Ran, 4673335 Herzeliya (IL); PERI, Amir, 4673335 Herzeliya (IL)
(74) Representative: V.O.

(57) **Abstract**

Various implementations described herein are directed to a system comprising energy storage circuits connected in series. Each energy storage circuit may comprise a first terminal, a second terminal, an energy storage unit, a pre-charge circuit, and/or a bypass diode. The energy storage unit and the pre-charge circuit may be connected in series to form a series connection between the first terminal and the second terminal, while the bypass diode may be connected in parallel to the series connection. The pre-charge circuit may be configured to close a first current path between the first terminal and the second terminal based on receiving a signal. The bypass diode may be configured to, based on the voltage between the first terminal and the second terminal having an opposite polarity to the voltage across the energy storage unit, close a second current path between the first terminal and the second terminal.

## Description

### CROSS-REFERNECE TO RELATED APPLICATIONS

This application claims the benefit of U.S. Provisional Application No. 63/479,625, filed on January 12, 2023. The above-referenced application is hereby incorporated by reference in its entirety.

### FIELD OF THE DISCLOSURE

The disclosure relates generally to power storage systems. More specifically, the disclosure provides a system and method for connecting and pre-charging an energy storage system.

### BACKGROUND OF THE DISCLOSURE

Energy storage systems may comprise a plurality of energy storage circuits, which may be connected in series. Each energy storage circuit may comprise an energy storage unit (e.g., a battery cell, or battery cells connected to each other), terminals, and/or a switch. An anode or a cathode of the energy storage unit may be connected directly to one of the terminals of the energy storage circuit. The switch may be connected between the anode or the cathode, and another terminal of the energy storage circuit. The series connection of energy storage circuits may be connected to a management system (e.g., Battery Management System - BMS), which may comprise a capacitor connected across the terminals of the management system. Prior to commencement of power production by the energy storage system, the capacitor of the management system may be discharged (e.g., the voltage level over this capacitor may be zero). In the event that the management system controls the switches of the serially connected energy storage circuits to close a conduction path between the terminal and the energy storage unit, the switches may not respond synchronously. In case the switches do not respond synchronously, the voltage level across one of the switches that did not close the conduction path between the terminal and the energy storage, may be equal to the sum of the voltage levels of energy storage units of the serially connected energy storage circuits. Therefore, the switch should be rated to block a voltage equal to the sum of the voltage levels of the energy storage units of the serially connected energy storage circuits.

As mentioned above, the management system may comprise a capacitor connected across the terminals of the management system. In some cases, each energy storage circuit may comprise capacitance (e.g., parasitic capacitance, or capacitance of a capacitor of the energy storage circuit). Applying a voltage across these capacitors when the capacitors are discharged, may result in an in-rush current through the management system, through the energy storage circuits, or through both. Such an in-rush current (e.g., may be related to the rate of change of the voltage) may result in damage to the energy storage circuits, to the management system, or to both. To avoid in-rush current to the management system, or within the energy storage circuit, it may be beneficial to charge the capacitors or adjust the capacitances of the energy storage circuits in the power storage system via a pre-charge circuit (e.g., comprising a switch and a resistor or resistors) prior to drawing power from the power storage system. The pre-charging operation may charge the capacitor or modify the capacitances of the energy storage circuits, thus limiting the in-rush current. In some cases, a pre-charge circuit may be used for all of the plurality of serially connected energy storage circuits. Using a single pre-charge circuit in the energy storage system may require to activate each switch of the serially connected energy storage circuit. As described above, in case the switches do not respond synchronously, a voltage level across one of the switches that did not close the conduction path between the terminal and the energy storage units, may be equal to the sum of the voltage levels of energy storage units of the serially connected energy storage circuits, and the switches should be rated accordingly.

### BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

A first aspect of the disclosure provides an energy storage circuit may comprise an energy storage unit, a pre-charge circuit, a sensor and a controller. The controller may be configured to control the pre-charge circuit to close a current path between one of the first terminal or the second terminal of the energy storage circuit and the energy storage unit of the energy storage circuit, based on sensing (e.g., via the sensor) a negative voltage between the first terminal and the second terminal of the energy storage circuit (e.g., with respect to the voltage of the energy storage unit). According to aspects of the disclosure herein, the controller may be configured to control the pre-charge circuit to close the current path based on a received signal.

Another aspect of the disclosure provides a method which may comprise detecting (e.g., by a sensor), a polarity of a voltage between a first terminal and a second terminal of an energy storage circuit, and closing a pre-charged circuit based on a determination (e.g., by a controller) that a polarity of the voltage between the first terminal and the second terminal, is opposite of a polarity of an energy storage unit of the power storage circuit. The method may comprise closing the pre-charged circuit responsive to a pre-charge activation signal that may be received by the energy storage circuit.

### BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:
Figure 1 shows an example energy storage circuit.
Figures 2 and 3 show example systems comprising energy storage circuits connected to a second circuit.
Figure 4 shows an example system with three energy storage circuits connected to a second circuit and a closed pre-charge circuit.
Figures 5A, 5B, and 5C show graphs of voltage versus time according to illustrative systems.
Figure 6 shows an example system with three energy storage circuits connected to a second circuit and two closed pre-charge circuits.
Figure 7 shows an example system with three energy storage circuits connected to a second circuit and three closed pre-charge circuits.
Figure 8 shows an example energy storage circuit comprising a capacitor connected in parallel to a switch.
Figure 9 shows an example energy storage circuit with a current sensor.
Figure 10 shows an example of an energy storage circuit.
Figures 11 and 12 show example energy storage circuits comprising additional circuitry.
Figure 13 shows an example pre-charge circuit.
Figure 14 illustrates a flowchart for a method of pre-charging energy storage circuits.
Figure 15 shows an example energy storage circuit comprising a bypass diode.
Figures 16A, 16B, and 16C show other example systems comprising energy storage circuits connected to a second circuit.
Figures 17A, 17B, and 17C show graphs of voltage versus time between the switches and the impedances in the systems in Figures 16A, 16B, and 16C.
Figure 18 illustrates a flowchart for another method of pre-charging energy storage circuits.

### DETAILED DESCRIPTION OF THE DISCLOSURE

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure.

Aspects of the disclosure herein may relate to circuits systems and methods for pre-charging an energy storage system. The energy storage system may comprise energy storage circuits and a second circuit. An energy storage circuit according to aspects of the disclosure herein may comprise two terminals, a first terminal and a second terminal, an energy storage unit, a pre-charge circuit, a sensor and/or a controller. The energy storage unit may comprise an energy storage cell or multiple energy storage cells connected to each other (e.g., in series, in parallel, or in a combination of series and parallel connections). The pre-charge circuit may comprise a switch and a resistor connected in series. The pre-charge circuit and the energy storage unit may be connected in series to form a series connection between the first terminal and the second terminal. The sensor may be configured to detect an electrical characteristic relating to the energy storage circuit. For example, the sensor may be configured to detect a voltage between the first terminal and the second terminal. Additionally, or alternatively, the sensor may be configured to detect a current through one of the first terminal or the second terminal. The controller may be configured to control the pre-charge circuit to close a current path between one of the first terminal or the second terminal and the energy storage circuit. The controller may close the current path based on sensing a negative voltage between the first terminal and the second terminal, with respect to the voltage of the energy storage unit (e.g., a first polarity of the voltage between the first terminal and the second terminal, is opposite a second polarity of the energy storage unit). According to aspects of the disclosure herein, the controller may be configured to control the pre-charge circuit to close the current path based on a received signal. Herein, the phrase "controlling the pre-charge circuit to close a current path between one of the first terminal or the second terminal and the energy storage unit" is also referred to as "closing the pre-charge circuit".

According to aspects of the disclosure herein, a plurality of energy storage circuits may be cascaded (e.g., connected in series). The cascade of energy storage circuits may be configured to connect to a second circuit (e.g., a BMS), which may include a capacitor connected across terminals thereof. The second circuit may be configured to provide a signal to one or more of the plurality of energy storage circuits. One or more of the cascaded energy storage circuits that received the signal, may control the pre-charge circuit thereof to close a current path between one of the first terminal or the second terminal, and the energy storage unit. As further explained below, once the controller of one of the energy storage circuits that received the signal closes the pre-charge circuit thereof, a negative voltage may develop across the terminals of the other energy storage circuits in the cascade. Based on this negative voltage, the controllers of the other energy storage circuits may close the respective pre-charge circuits thereof (e.g., regardless if they received the signal provided by the second circuit, or not). This may enable to reduce the ratings of switches in the energy storage circuits (e.g., as further explained below).

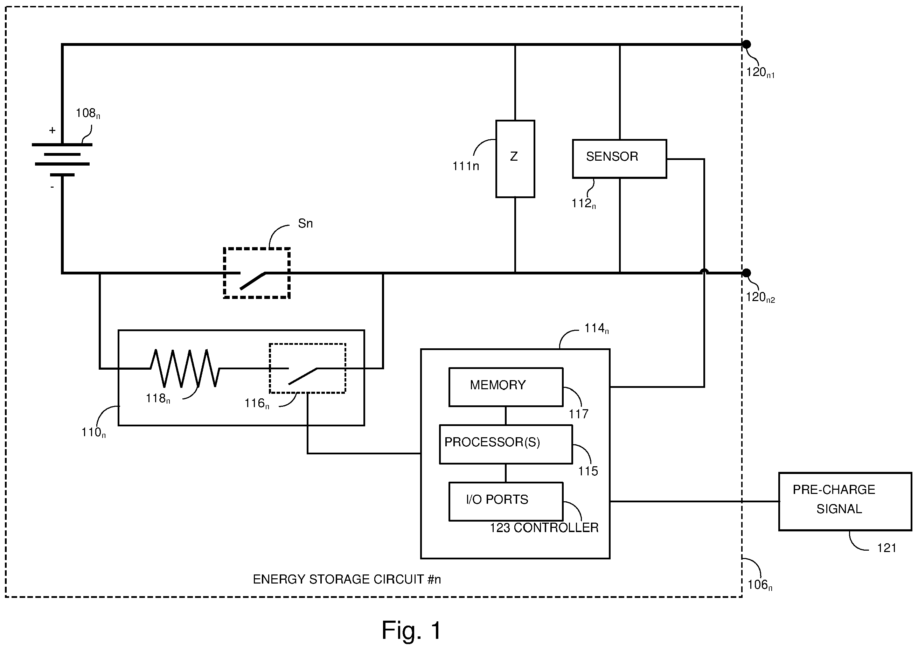

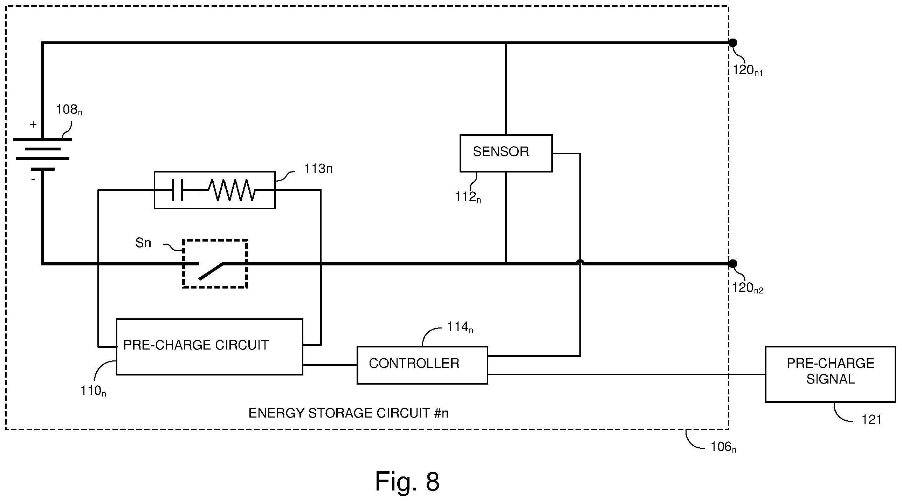

Figure 1 shows an example energy storage circuit 106n. The energy storage circuit 106n may comprise an energy storage unit 108n, a pre-charge circuit 110n, a first terminal 120n1, and/or a second terminal 120n2. The energy storage unit 108n and the pre-charge circuit 110n may be connected in series between the first terminal 120n1 and the second terminal 120n2. The energy storage circuit 106n may further comprise a switch Sn, a sensor 112n, and/or a controller 114n. The switch Sn may be connected in parallel with the pre-charge circuit 110n. The sensor 112n may be connected to the first terminal 120n1, the second terminal 120n2, or to both, and may further be connected to controller 114n. The controller 114n may further be connected to pre-charge circuit 110n. In the example of Figure 1, pre-charge circuit 110n is shown as comprising a switch 116n connected in series with a resistor 118n. The switch 116n may be a transistor (e.g., a metal oxide semiconductor field effect transistor (MOSFET), an insulated-gate bipolar transistor (IGBT), or bipolar junction transistor (BJT)) or an electro-mechanical switch. Additionally, Figures 1, 2, 3, 4, 5, 7, 6, 9, 10, 11, 12, and 13 show the energy storage circuits 106n as comprising an impedance 111n, connected between the first terminal 120n1 and the second terminal 120n2. It is noted that according to the disclosure herein, and as further explained below (e.g., in conjunction with Figure 8), the impedance 111n may represent an equivalent impedance of the energy storage circuit 106n. In some cases, a circuit such as the energy storage circuit 106n may include an actual impedance (e.g., such as a capacitor) connected between the first terminal 120n1 and the second terminal 120n2.

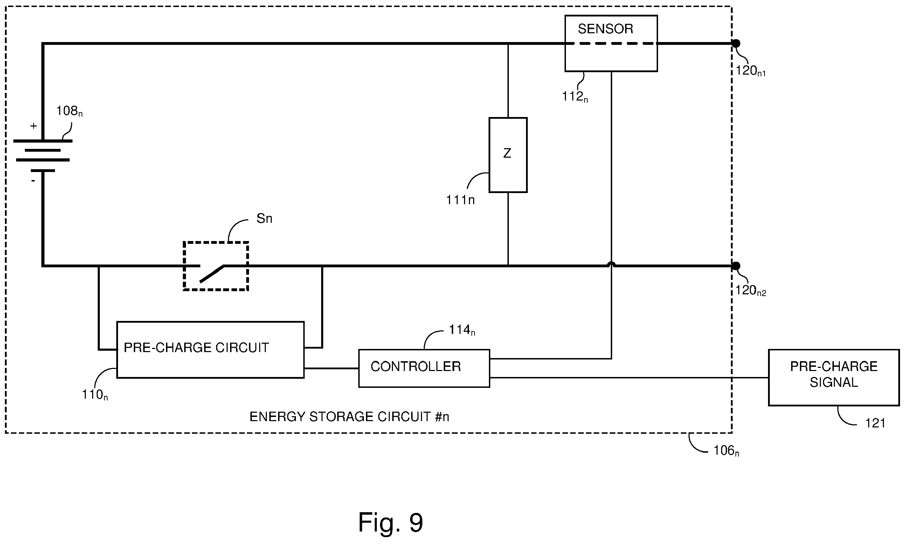

The sensor 112n may be configured to detect an electrical characteristic of the energy storage circuit 106n. For example, the sensor 112n may be a voltage sensor (e.g., implemented by employing a resistive or capacitive divider, a resistive or capacitive bridge, comparators, or other electrical components) configured to measure a voltage between the first terminal 120n1 and the second terminal 120n2 (e.g., the electrical characteristic is a voltage between the first terminal 120n1 and the second terminal 120n2). The sensor 112n may be a current sensor as further explained below in conjunction with Figure 9. In some examples, the sensor 112n may be configured to respond to a negative voltage between the first terminal 120n1 and the second terminal 120n2. For example, sensor 112n may be an opto-coupler configured to generate a signal to controller 114n based on a negative voltage between first terminal 120n1 and second terminal 120n2.

The term negative voltage between first terminal 120n1 and second terminal 120n2 may relate to a voltage with a polarity which is opposite the polarity of the voltage of the energy storage unit 108n. For example, the first terminal 120n1 may be connected (e.g., directly or indirectly) to the anode (e.g., the positive terminal) of energy storage unit 108n and the second terminal 120n2 may be connected (e.g., directly or indirectly) to the cathode (e.g., the negative terminal) of energy storage unit 108n. In such cases, if the voltage at second terminal 120n2 is higher than the voltage at the first terminal 120n1, then the voltage between the first terminal 120n1 and the second terminal 120n2 may be considered as a negative voltage, with respect to the voltage of energy storage unit 108n.

The controller 114n may be partially or fully implemented as one or more computing devices and/or may include one or more processors, such as an Application Specific Integrated Circuit (ASIC) controller, a Field Programmable Gate Array (FPGA) controller, a microcontroller, and/or a multipurpose computer. The controller 114n may comprise one or more processors 115 connected to a memory 117 and/or one or more Input/Output (I/O) ports 123. Th memory 117 may store computer readable instructions as well as data (e.g., measurements from sensor(s) 112n or parameters). I/O ports 123 may be configured to connect modules (e.g., sensor(s) 110, pre-charge circuit 110n, or other modules or circuits as may further be elaborated below) to the processor 115. The one or more processors 115 may execute the instructions, which may result in the controller 114n performing one or more steps and/or functions as described herein that are attributed to the controller 114n.

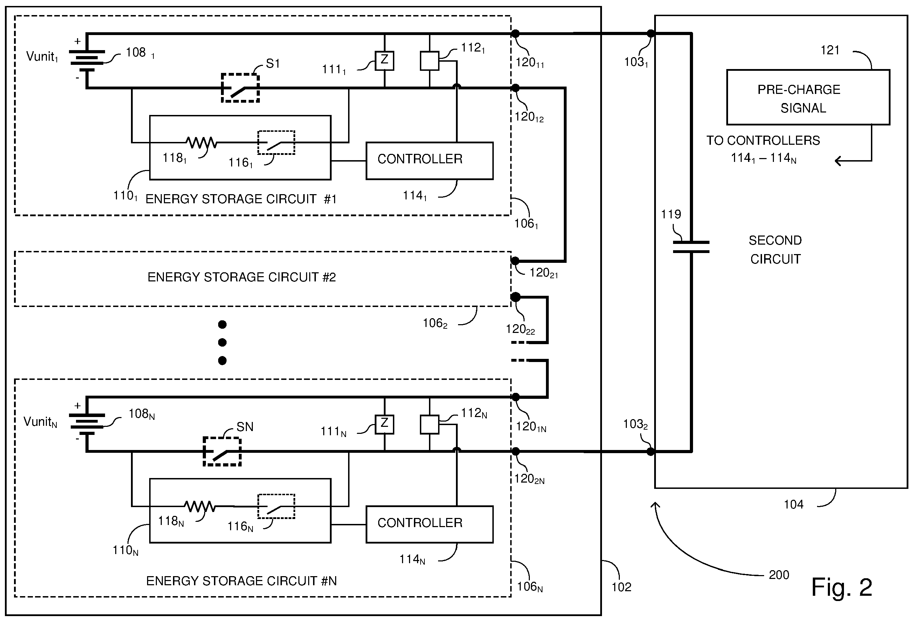

Reference is now made to Figure 2 which shows a system 200 comprising a cascade 102 of energy storage circuits 1061-106N, which may be connected to a second circuit 104 (e.g., a Battery Management System). The cascade 102 may be, for example, a part of a storage system constructed from a plurality of energy storage circuits 1061-106N. The second circuit 104 may comprise the terminals 1031 and 1032, and a capacitor 119 connected between the terminals 1031 and 1032. The second circuit 104 may be configured to provide or generate a pre-charge signal 121 (e.g., via a switch, or a second controller). In examples where the pre-charge signal 121 is provided by a switch, the switch may be a mechanical switch, an electro-mechanical switch, or an electrical switch (e.g., a Metal Oxide Semiconductor Field Effect Transistor - MOSFET, a Bipolar Junction Transistor - BJT, Insulated Gated Bipolar Transistor - IGBT, or the like). In Figure 2, the first terminal 120n1 of the energy storage circuit 106n may be connected to the second terminal 120(n-1)2 of the energy storage circuit 106n-1. The first terminal 12011 of the energy storage circuit 1061 may be connected to the terminal 1031 of the second circuit 104, and/or the second terminal 120N2 of the energy storage circuit 106 may be connected to the terminal 1032 of the second circuit 104. According to the disclosure herein, it may be required to pre-charge the capacitor 119. It may also be required to pre-charge the energy storage circuits. According to the disclosure herein, one of the controllers 1141-114N may receive a signal, such as the pre-charge signal 121 (e.g., a signal generated by a switch in energy storage circuit 106n, the second circuit 104, or a controller in second circuit 104).

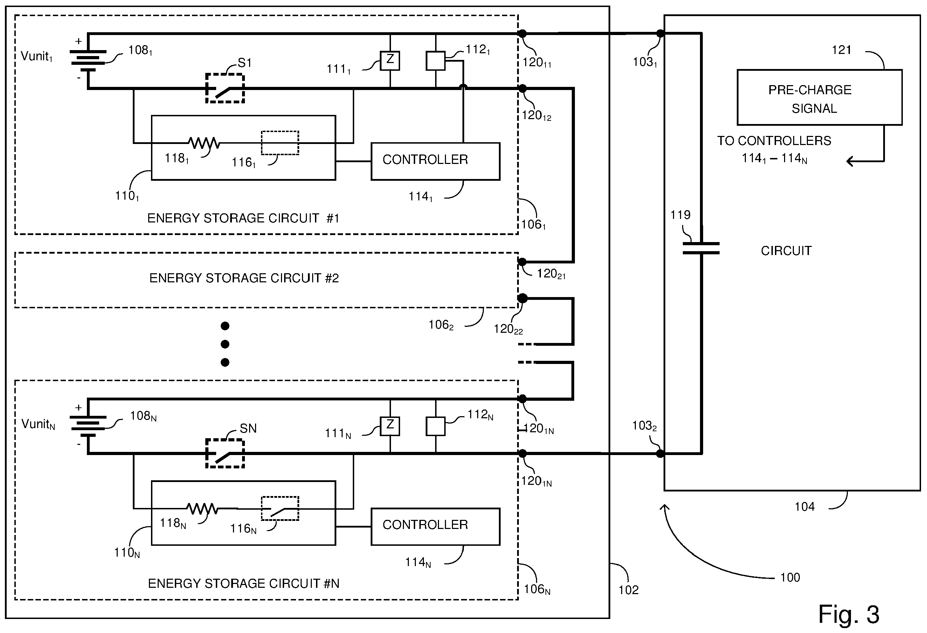

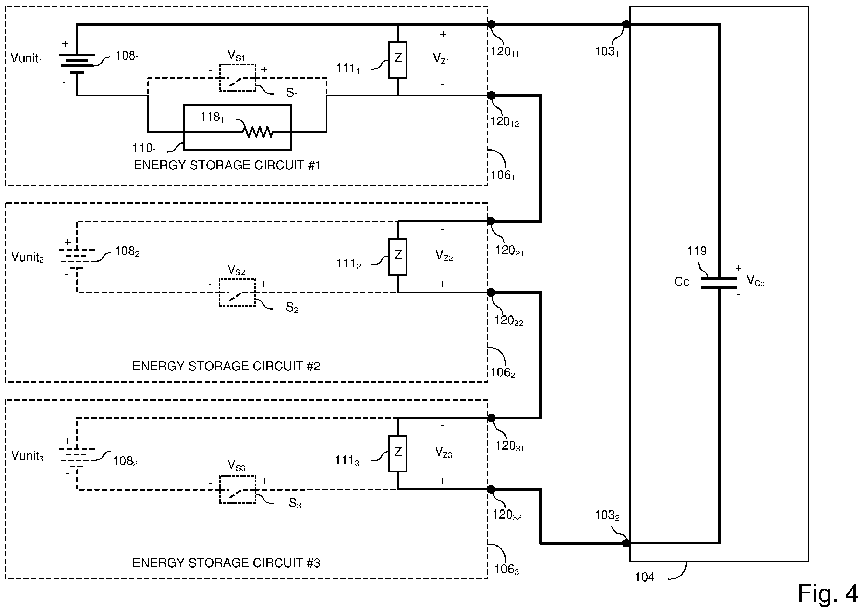

Responsive to receiving the pre-charge signal 121, one or more of controllers 1141-114n of the energy storage circuits 1061-106N may close the corresponding pre-charge circuit 1101-110n. However, the controllers 1141-114n may not receive pre-charge signal 121 at the same time. In some cases, the controllers 1141-114n or the pre-charge circuits 1101-110n may not respond concurrently. In some examples, some of the controllers 1141-114n may not receive the pre-charge signal 121 at all (e.g., due to disconnected communications, or signal disruption). According to an example of the disclosure herein, and with reference to Figure 3, the controller 1141 may receive a pre-charge signal 121 and close the pre-charge circuit 1101 (e.g., the controlled pre-charge circuit 1101 may close the switch 1161, thereby creating a current path between the second terminal 12012 and the negative terminal 12011 of energy storage circuit 1061). Closing the pre-charge circuit 1101 may result in an equivalent circuit shown in Figure 4. Figure 4 shows an example equivalent circuit where the cascade 102 may comprise three energy storage circuits 1061, 1062, and 1063, and the pre-charge circuit 1101 may be closed. It is noted that, for the sake of clarity of the figure, not all the components of energy storage circuits 1061, 1062, and 1063 are shown in Figure 4. Also, components shown with a dashed line indicate that these components do not form a part of the equivalent circuit, but are shown for the sake of the explanations herein.

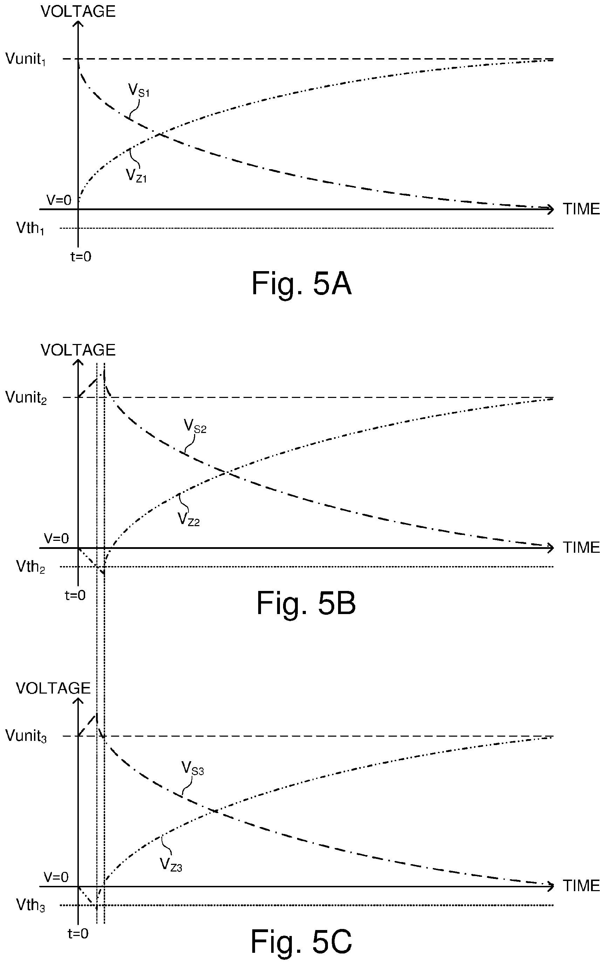

In Figure 4, prior to closing the pre-charge circuit 1101, the voltage across equivalent impedances 1111, 1112 and 1113, and across capacitor 119 may be zero, and the voltage across each of switches S1, S2, or S3 may be the voltage, Vunitn, of the corresponding energy storage units 1081, 1082, or 1083. For example, Figures 5A, 5B, and 5C, may show voltages across the impedances and the switches of the energy storage circuits 1061, 1062, and 1063 of Figure 4, respectively. Initially, the voltages, VZ1, VZ2, and VZ3 across impedances 1111, 1112 and 1113 are zero, and the voltages VS1, VS2, and VS3 across each switches S1, S2, or S3 may correspond to Vunit1, Vunit2, and Vunit3, respectively. After closing the switch 1161 at time t=0, the capacitor 119 may start charging. As shown in Figure 5A, after closing the switch 1161, the voltage, VS1, across the switch S1 may reduce, and the voltage, Vz1, across the impedance 1111 may rise. The rise of Vz1 may result in a positive voltage across the first terminal 12011 and the second terminal 12012 (e.g., the voltage at first terminal 12011 may be higher than the voltage at second terminal 12012).

After closing the switch 1161, and as shown in Figure 4, the capacitor 119 and the equivalent impedances 1112 and 1113 may form an impedance divider, which divides the voltage, VZ1 (e.g., the voltage over impedance 1111) based on the values of these impedances. This impedance divider may produce a voltage VCc between the terminal 1031 and the terminal 1032, a voltage VZ2 between the terminal 12021 and the terminal 12022, and a voltage VZ3 between the terminal 12031 and the terminal 12032. Thus, after closing the switch 1161, and as shown in Figure 5B, the voltage, VZ2, between the terminal 12021 and the terminal 12022 may reduce, such that the polarity of VZ2 may be opposite the polarity of energy storage unit 1082 (e.g., the voltage between terminal 12021 and terminal 12022 becomes negative). As shown in Figure 5B, the voltage, Vs2, across the switch S2 may start to rise above the voltage level, Vunit2, of the energy storage unit 1082.

Similarly, after closing the switch 1161, and as shown in Figure 5C, the voltage, VZ3, between the terminal 12031 and the terminal 12032 may reduce, such that the polarity of VZ3 may be opposite the polarity of the energy storage unit 1083 (e.g., the voltage between the terminal 12031 and the terminal 12032 becomes negative). As shown in Figure 5C, the voltage, Vs3, over switch S3 may start to rise above the corresponding voltage, Vunit3, of the energy storage unit 1083.

Additionally, the controller 1142 may be configured to, based on measurements by the sensor 1122 detect that the voltage between the terminal 12021 and the terminal 12022 is negative (e.g., below a threshold voltage Vth2), and close the pre-charge circuit 1102. Similarly, the controller 1143 may be configured to, based on measurements by the sensor 1123, detect that the voltage between the terminal 12031 and the terminal 12032 is negative (e.g., below a threshold voltage Vth3 which may be different from Vth2), and close the pre-charge circuit 1103.

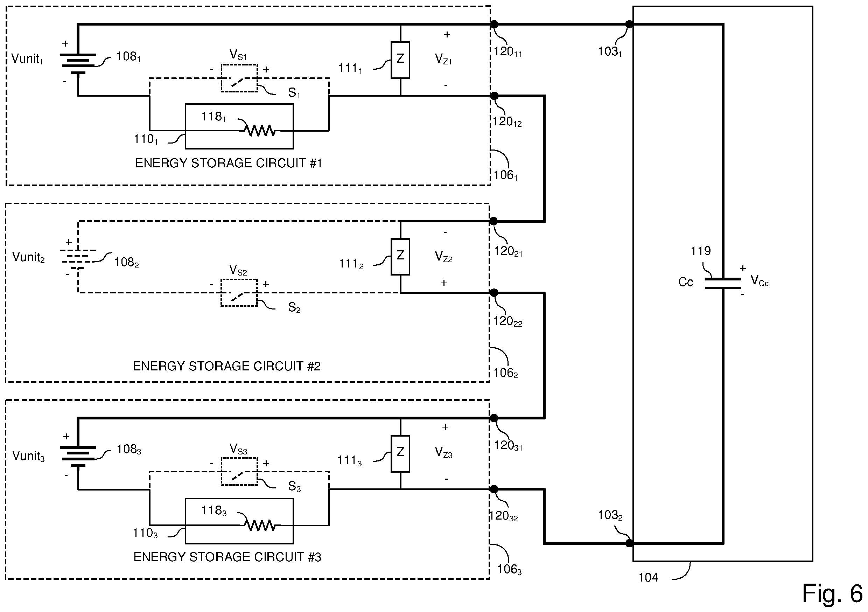

In some cases, the controllers 1142 and 1143 and/or the pre-charge circuits 1102 and 1103, may not respond concurrently to a signal. In the examples shown in Figures 6, 7, and 8, the pre-charge circuit 1103 may close prior to the pre-charge circuit 1102. With reference to Figures 6 and 5C, the controller 1143 may control the pre-charge circuit 1103 to close, based on measurements from the sensor 1123. For example, the controller 1143 may detecting that the voltage, VZ3, between the terminal 12031 and the terminal 12032 is negative (e.g., below a threshold Vth3). Thus, as seen in Figure 5C, although the voltage across the switch S3 has started to rise above the corresponding voltage, Vunit3, of the energy storage unit 1083, once the pre-charge circuit 1103 closes, the voltage, Vs3, across the switch S3 may reduce, and the voltage VZ3 may rise.

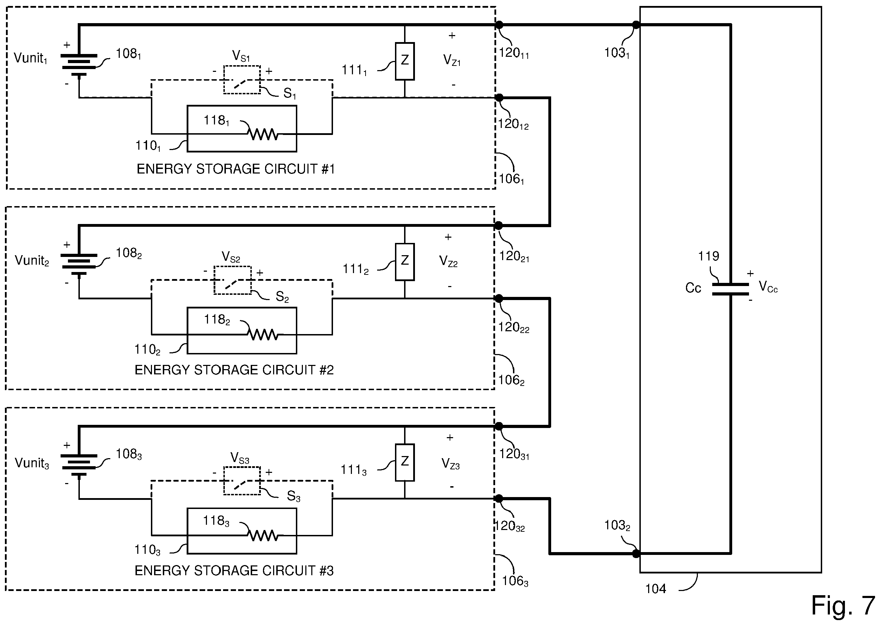

Figure 7 shows an example of an equivalent circuit where the cascade 102 may comprise three energy storage circuits 1061, 1062, and 1063, and all the pre-charge circuits 1101, 1102, and 1103 may be closed. With reference to Figures 7, and 5B, the controller 1142 may be configured to, based on measurements from the sensor 1122, detect that the voltage between the terminal 12021 and the terminal 12022 is negative (e.g., below a threshold Vth2) and control the pre-charge circuit 1102 to close a current path between the terminal 12022 and the energy storage unit 1082. Thus, as shown in Figure 5B, although the voltage over the switch S2 has started to rise above the corresponding voltage, Vunit2, of the energy storage unit 1082, once the pre-charge circuit 1102 closes, the voltage, Vs2, the over switch S2 may reduce, and the voltage VZ2 may rise.

In view of the description above in conjunction with Figures 3, 4, 6, and 7, the ratings of the switches S1-SN may be determined to be above the corresponding Vunitn, by a determined value (e.g., related to a voltage detection threshold Vthn), regardless of the number of energy storage circuits 1061-106N connected in cascade 102. Also, in view of the description above in conjunction with Figures 3, 4, 6, and 7, it may be sufficient that a single one of the controllers 1141-114N may receive the pre-charge signal 121, and close the corresponding pre-charge circuit 110n thereof, and the rest of the controllers may control the corresponding pre-charge circuits 1101-110N to close as well, based on a negative voltage between the corresponding the first terminal 120n1 and the second terminal 120n2. After the pre-charge process ends, the circuit 104 may control each of switches S1-SN to start conducting based on a determination (e.g., by a user, by circuit 104, by a signal) that power should be produced (e.g., discharged) from cascade 102 of energy storage circuits 1061-106N, or based on a determination that cascade 102 of energy storage circuits 1061-106N should be charged.

Figure 8 shows an energy storage circuit 106n comprising an impedance 113n connected in parallel to the switch Sn (e.g., also connected between the terminal 120n2 and the negative terminal of the energy storage unit 108n). For example, the impedance 113n may comprise a capacitor and a resistor. The impedance 113n may be an actual impedance, or represent the parasitic capacitance and resistance of the switch Sn. In both cases (e.g., the impedance 113n, the impedance of the energy storage unit 108, or both) may be represented by an equivalent impedance 111n. In some cases, the impedance 111n may comprise an actual capacitor connected between the terminal 120n1 and the terminal 120n2. The disclosure herein relates to the impedance 111n for the ease and clarity of the description of the embodiments. Nevertheless, this should not be considered as limiting.

Also, as mentioned above, the sensor 112n may be an opto-coupler configured to generate a signal to the controller 114n based on detecting a negative voltage between the first terminal 120n1 and the second terminal 120n2. In case the sensor 112n is an opto-coupler, the opto-coupler is connected such that the transmitter Light Emitting Diode (LED) may be forward-biased in case the voltage between the first terminal 120n1 and the second terminal 120n2 is negative (e.g., the voltage at second terminal 120n2 is higher than the voltage at first terminal 120n1). The receiver photosensor of the opto-coupler may be connected to the controller 114n and provide a signal to the controller 114n in case the voltage between first terminal 120n1 and the second terminal 120n2 is negative.

Figure 9 shows an energy storage circuit 106n in which the sensor 112n is a current sensor. A current sensor may be implemented by employing a Current Transformer (CT) sensor, a Hall Effect sensor, or a zero-flux sensor. As a current sensor, the sensor 112n may be configured to measure a current through the first terminal 120n1 or through the second terminal 120n2 (e.g., the electrical characteristic is a current through the first terminal 120n1 or the second terminal 120n2). For example, in case of a negative voltage is detected between the terminal 120n1 and the terminal 120n2, a current may flow from the terminal 120n2 to the terminal 120n1. The sensor 112n may detect such a current and provide an indication to the controller 114n.

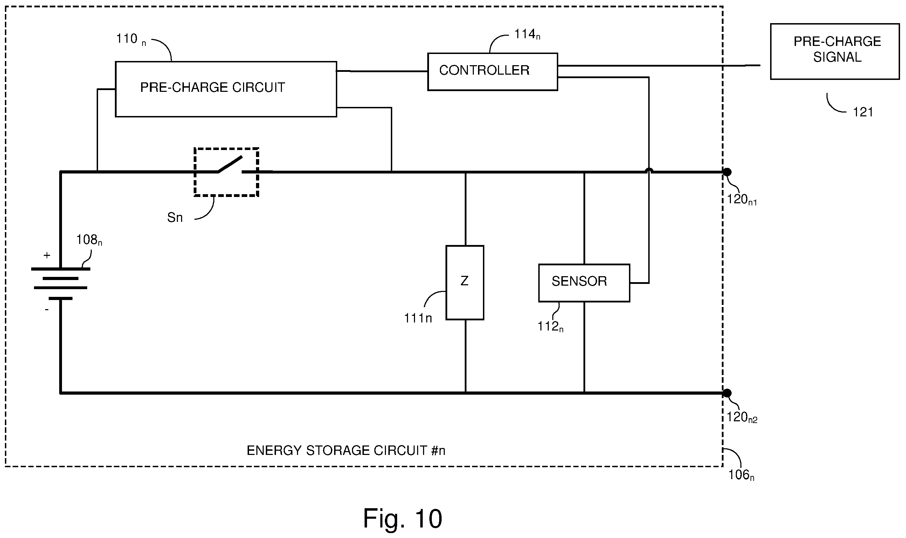

In Figures 1, 2, 3, 4, 6, 7, 8, 9, 11, 12, and 13, the pre-charge circuit 110n and the switch Sn may be connected between the terminal 120n2 and the negative terminal of the energy storage unit 108n. Alternatively, as shown in Figure 10, the pre-charge circuit 110n and the switch Sn may be connected between the terminal 120n1 and the positive terminal of energy storage unit 108n. In some cases, the pre-charge circuit 110n may be connected between the terminal 120n1 and the positive terminal of energy storage unit 108n, and the switch Sn may be connected between the terminal 120n2 and the negative terminal of the energy storage unit 108n. In some cases, the pre-charge circuit 110n may be connected between the terminal 120n2 and the negative terminal of energy storage unit 108n, and the switch Sn may be connected between the terminal 120n1 and the positive terminal of the energy storage unit 108n.

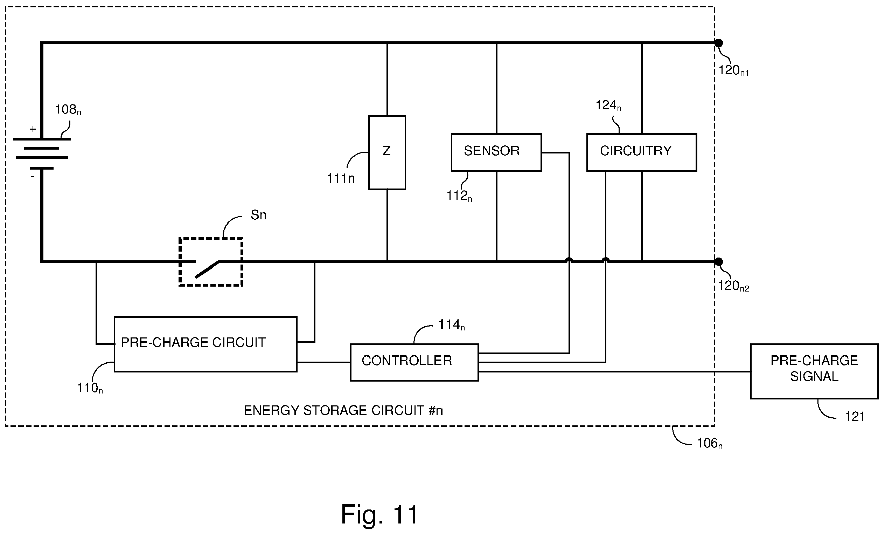

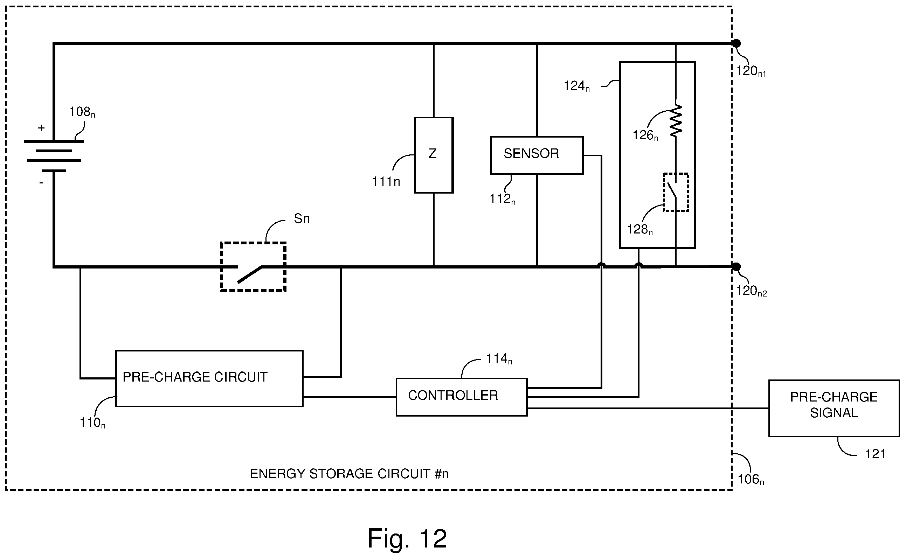

Prior to closing the pre-charge circuits 1101-110N, the plurality of energy storage circuits 1061-106N (e.g., as may be shown in Figures 1B or 1C) may be required to connect to each other. In some cases, it may be required to connect a plurality of energy storage circuits 1061-106N when the voltage between terminals 120n1 and 120n2 may be low (e.g., less than 10V, less than 1V), or even zero. To that end, and with reference to Figure 11, the energy storage circuit 106n may comprise the circuitry 124n connected between the terminal 120n1 and the terminal 120n2. The controller 114n may be connected to the circuitry 124n and the controller 114n may control the circuitry 124n to reduce the voltage between the terminal 120n1 and the terminal 120n2. As shown in Figure 12, the circuitry 124n may comprise a series connection of a resistor 126n and a switch 128n. The controller 114n may control the switch 128n to close a conduction path between the terminal 120n1 and the terminal 120n2, thereby reducing the voltage between the terminal 120n1 and the terminal 120n2.

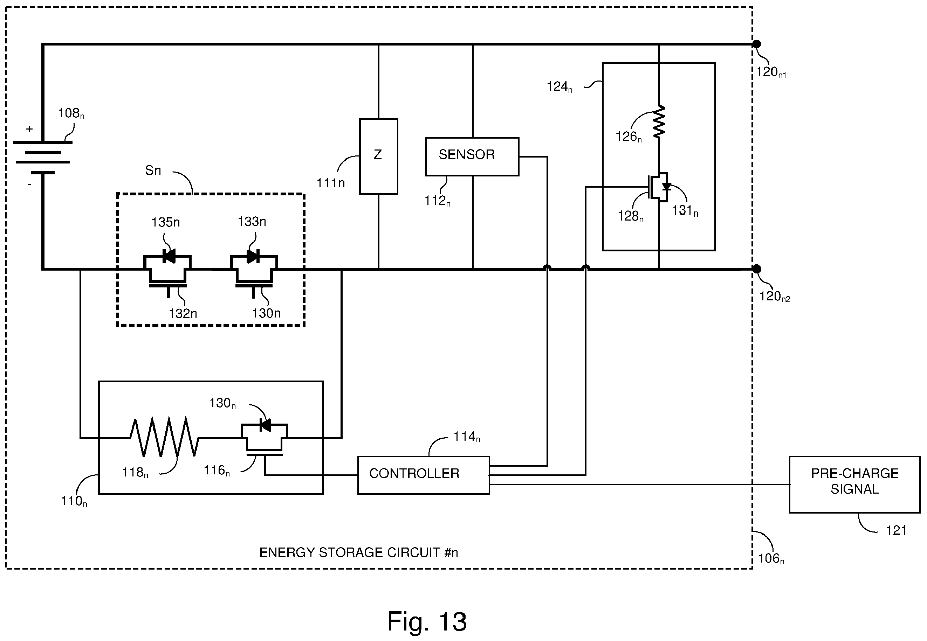

Reference is now made to Figure 13, which shows examples of the pre-charge circuit 110n, the circuitry 124n, and the switch Sn. In Figure 13, the switch 116n may be implemented by a semiconductor switch (e.g., a Metal Oxide Semiconductor Field Effect Transistor - MOSFET, a Bipolar Junction Transistor - BJT, Insulated Gated Bipolar Transistor - IGBT, or the like). An anode of the body diode 130n of the switch 116n may be connected to the terminal 120n2 and the cathode of the body diode 130n of switch 116n may be connected to the negative terminal of the energy storage unit 108n. In case the pre-charge circuit 110n is connected between the terminal 120n1 and the positive terminal of energy storage unit 108n, the cathode of the body diode 130n may be connected to the terminal 120n2 and the anode of the body diode 130n may be connected to the negative terminal of energy storage unit 108n.

The switch 128n may be implemented by a semiconductor switch. An anode of the body diode 131n of the switch 128n may be connected to the terminal 120n1 and the cathode of the body diode 131n of the switch 128n may be connected to the terminal 120n2.

In Figure 13, the switch Sn is shown as a series connection of two semiconductor switches 130n and 132n, with opposing body diodes 133n and 135n. The controller 114n may control the switch 130n to switch to an on stage when the energy storage unit 108n needs to be discharged. Additionally, the controller 114n may control the switch 132n to switch to an on state when the energy storage unit 108n needs to be charged.

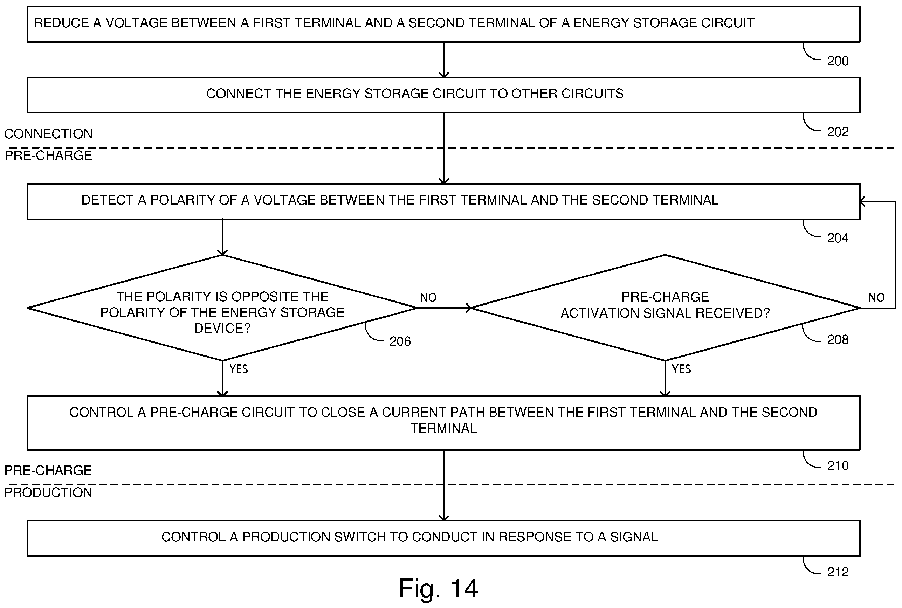

Reference is now made to Figure 14, which shows a method according to the disclosure herein. In step 200, a controller (e.g., controller 114n) may control a switch (e.g., switch 128n) to reduce a voltage between a first terminal (e.g., terminal 120n1) and a second terminal (e.g., terminal 120n2) of an energy storage circuit (e.g., energy storage circuit 106n).

In step 202, the energy storage circuit may be connected to other circuits. For example, the energy storage circuits 1061-106N may be connected in series and to the second circuit 104, as shown in Figures 2 and 3.

In step 204, a sensor (e.g., sensor 112n) may detect a polarity of a voltage between the first terminal and the second terminal. The sensor may be a voltage sensor, a current sensor, or may be configured to respond (e.g., an opto-coupler) to a negative voltage between the first terminal and the second terminal.

In step 206, the controller may determine if the polarity of the voltage between the first terminal and the second terminal is opposite of the polarity of the energy storage unit. Based on the determination that the polarity of the voltage between the first terminal and the second terminal is opposite the polarity of the energy storage, the method may proceed to step 210. Based on the determination that the polarity of the voltage between the first terminal and the second terminal is not opposite the polarity of the energy storage, the method may proceed to step 208.

In step 208, the controller may determine if a pre-charge activation signal was received. In case a pre-charge activation signal was received, the method may proceed to step 210. In case a pre-charge activation signal was not received, the method may return to step 204. It is noted that the order of steps 206 and 208 may be interchangeable.

In step 210, the controller may control a pre-charge circuit (e.g., pre-charge circuit 110n) to close a current path between the first terminal and the second terminal.

In step 212, the controller may control (e.g., turn on) a production switch (e.g., switch Sn) to conduct, in response a signal. For example, the circuit 104 may provide a signal to controller 114n to control switch Sn to an on state.

The disclosure above described that controller 114n may control pre-charge circuit 110n to close a current path between the first terminal and the second terminal. According to the disclosure herein, controller 114n may control pre-charge circuit 110n to open a current path between the first terminal and the second terminal based on another signal received from circuit 104, or based on a measurement from sensor 112n (e.g., indicating that the voltage between the terminals in positive). Controller 114n may control pre-charge circuit 110n to open a current path between the first terminal and the second terminal based on an elapsed time period (e.g., from the time controller 114 closed the current path). It is noted that controllers 1141-114N may be implemented as a single controller device, connected to each of pre-charge circuits 1101-110N and configured to activate the pre-charge circuits 1101-110N (e.g., responsive to receiving pre-charge signal 121 or responsive to receiving measurements from sensors 1121-112N).

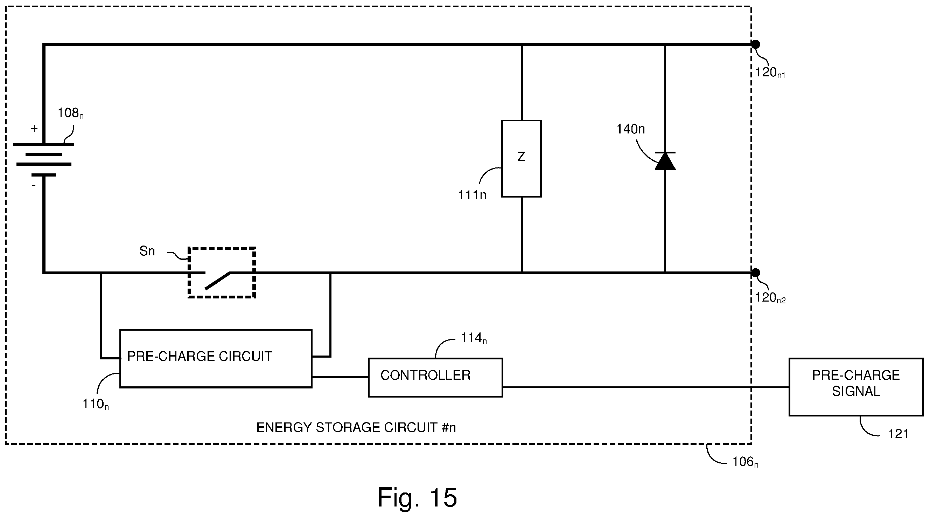

The disclosure above described an energy storage circuit 106n which includes a sensor 112n that measures a level of a voltage between terminals 120n1 and 120n2, and a controller 114n that, in response to detecting that a voltage between terminals 120n1 and 120n2 is negative, controls the pre-charge circuit 110n to close the switch 116n. Figure 15 shows an energy storage circuit 106n that may comprise a bypass diode 140n connected in parallel to a series connection of the energy storage unit 108n and the pre-charge circuit 1 10n. The anode of bypass diode 140n may be connected to the terminal 120n2 and the cathode of bypass diode 140n may be connected to the terminal 120n1. When the energy storage circuit 106n comprises the bypass diode 140n, the sensor 112n may be optional. In response to a negative voltage between first terminal 120n1 and second terminal 120n2, the bypass diode 140n may provide a current path (e.g., diode 140n is forward biased and becomes conductive) between the first terminal 120n1 and the second terminal 120n2, and this current path may bypass the energy storage circuit 106n.

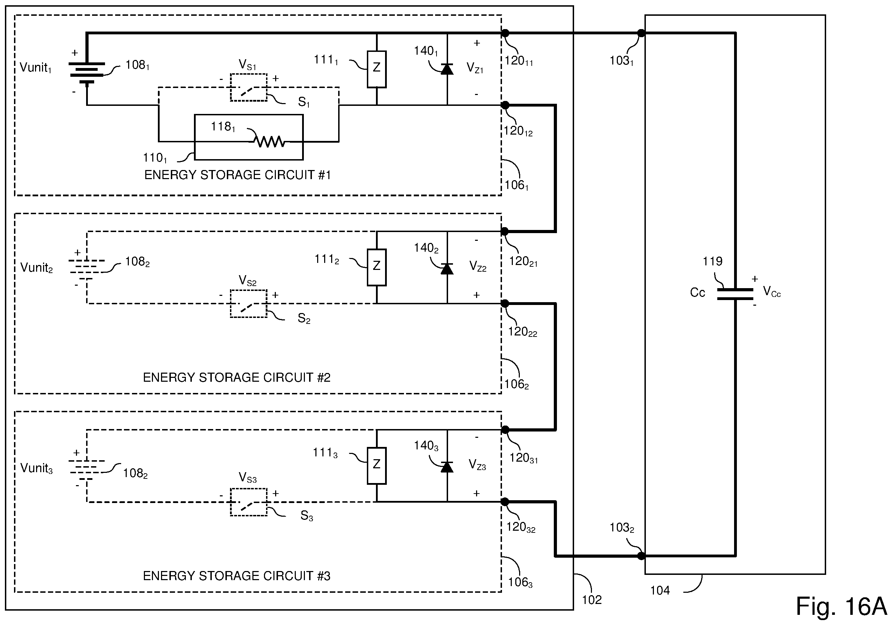

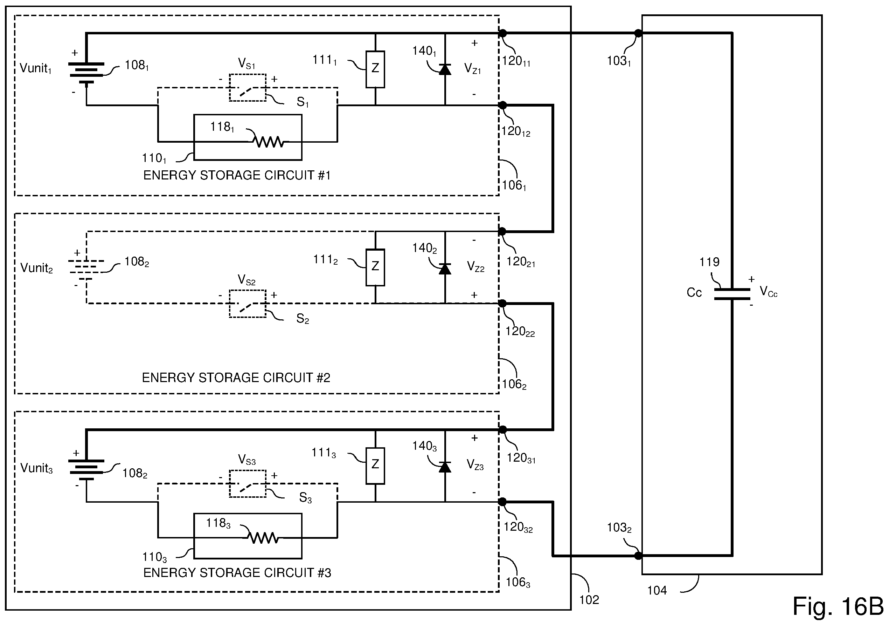

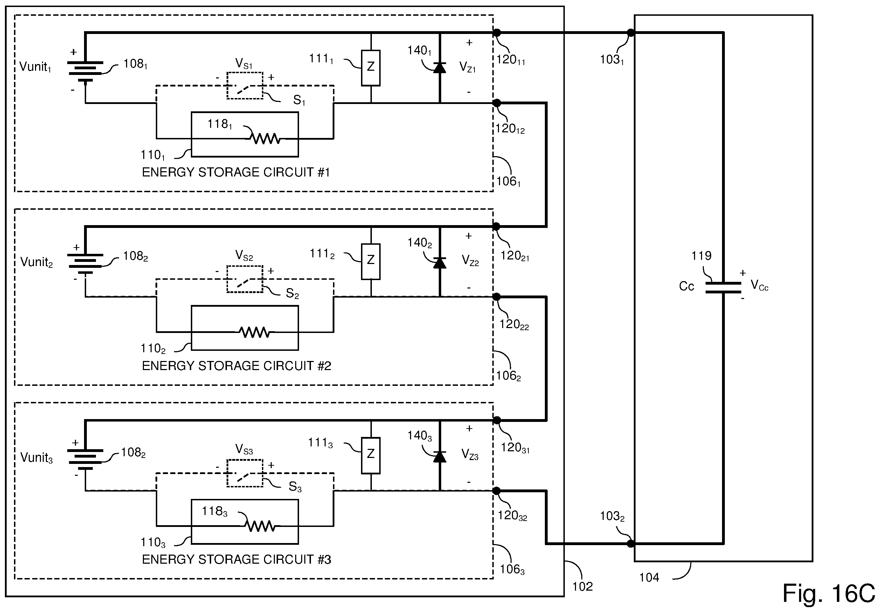

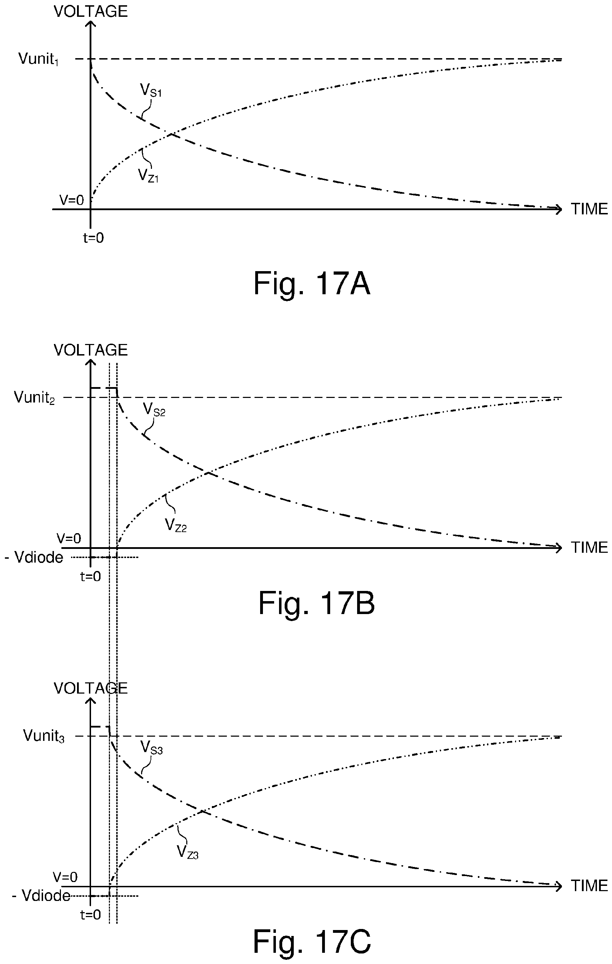

Reference is made to Figures 16A, 16B, and 16C which show alternative embodiments of the system in Figure 3. In Figures 16A-16C, the cascade 102 may comprise three energy storage circuits 1061, 1062, and 1063. It is noted that, for the sake of clarity of the figure, not all the components of energy storage circuits 1061, 1062, and 1063 are shown in Figures 16A, 16B, and 16C. Also, components shown with a dashed line indicate that these components do not form a part of the equivalent circuit, but are shown for the sake of the explanations herein. Reference is also made to Figures 17A, 17B, and 17C which may show voltages across the impedances and the switches of the energy storage circuits 1061, 1062, and 1063 of Figures 16A, 16B, and16C, respectively.

Initially, the voltages, VZ1, VZ2, and VZ3 across the impedances 1111, 1112 and 1113, respectively, are zero (e.g., since the capacitor 119 is discharged), and the voltages VS1, VS2, and VS3 across each switches S1, S2, or S3 may correspond to Vunit1, Vunit2, and Vunit3, respectively. With reference to Figures 16A, after closing switch 1161 at time t=0, the capacitor 119 may start charging. As shown in Figure 17A, after closing the switch 1161, as the capacitor 119 charges, the voltage, VS1, across the switch S1 may reduce, and the voltage, Vz1, across the impedance 1111 may rise. The rise of Vz1 may result in a positive voltage across the first terminal 12011 and the second terminal 12012 (e.g., the voltage at first terminal 12011 may be higher than the voltage at second terminal 12012).

After closing the switch 1161, and as shown in Figure 16A, the capacitor 119 and the equivalent impedances 1112 and 1113 may form an impedance divider, which divides the voltage, VZ1 (e.g., the voltage over impedance 1111) based on the values of these impedances. This impedance divider may produce a voltage VCc between the terminal 1031 and the terminal 1032, a voltage VZ2 between the terminal 12021 and the terminal 12022, and a voltage VZ3 between the terminal 12031 and the terminal 12032. Thus, after closing the switch 1161, and as shown in Figure 17B, the voltage, VZ2, between the terminal 12021 and the terminal 12022 may reduce, such that the polarity of VZ2 may be opposite the polarity of energy storage unit 1082 (e.g., the voltage between terminal 12021 and terminal 12022 becomes negative) to a level at which the bypass diode 1402 conducts (e.g., bypass diode 1402 becomes forward biased). When conducting, the bypass diode 1402 may provide a current path between terminal 12021 and terminal 12022 and this current path may bypass the energy storage circuit 1062. As shown in Figure 17B, the voltage, Vs2, across the switch S2 may rise above the voltage of Vunit2 by the voltage drop across bypass diode 1402.

Similarly, after closing the switch 1161, and as shown in Figure 17C, the voltage, VZ3, between the terminal 12031 and the terminal 12032 may reduce, such that the polarity of VZ3 may be opposite the polarity of the energy storage unit 1083 (e.g., the voltage between the terminal 12031 and the terminal 12032 becomes negative) to a level at which bypass diode 1403 may conduct (e.g., bypass diode 1403 becomes forward biased) and provide a current path between the terminal 12031 and the terminal 12032, and this current path may bypass the energy storage circuit 1063. As shown in Figure 17C, the voltage, Vs3, across the switch S3 may rise above the voltage of Vunit3 by the voltage drop across bypass diode 1403.

In some examples, the controllers 1142 and 1143 and/or the pre-charge circuits 1102 and 1103, do not respond concurrently to a signal. However, as shown in Figures 17B, the voltage, Vs2, across the switch S2 may remain at the level of the voltage of the energy storage unit 1082 until the controller 1142 responds to the pre-charge activation signal. Thereafter, the voltage Vs2 reduces and the voltage Vz2 may increase. Similarly, as shown in Figures 17C, the voltage, Vs3, across the switch S3 remains at the level of the voltage of the energy storage unit 1083 until the controller 1143 responds to the pre-charge activation signal. Thereafter, the voltage Vs3 may reduce and the voltage Vz3 may increase. Thus, switches S1, S2, and S3 need not be rated to operate at a voltage above level of the voltage of energy storage unit 108n.

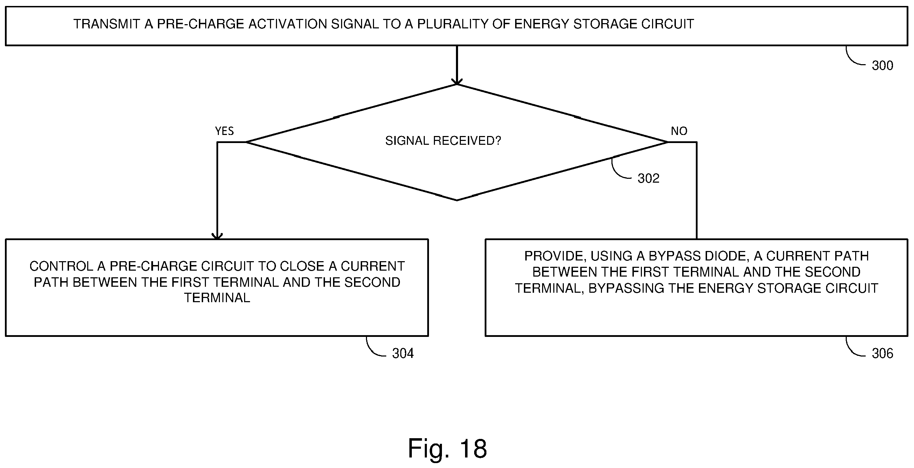

Reference is made to Figure 18, which may show a method according to the disclosure herein. In step 300, a pre-charge activation signal is transmitted to a plurality of energy storage circuits such as the energy storage circuits1061-106N. For example, the circuit 104 (Figure 3) may be configured to provide or generate a pre-charge signal 121 (e.g., via a switch, or a second controller).

In step 302, a determination is made, by each of controllers 1141-114N of plurality of energy storage circuits 1061-106N, if the pre-charge activation signal, such as pre-charge signal 121, was received.

In step 304, responsive to receiving the pre-charge activation signal 121, one or more of controllers 1141-114n of the energy storage circuits 1061-106N may close the corresponding pre-charge circuit 1101-110n thereby creating a current path between the terminal 1202 and the terminal 1201 of energy storage circuit 106.

In step 306, in cases in which one or more of the energy storage circuits 1061-106N did not receive the pre-charge activation signal, a current path may be provided by using bypass diode 104n, and this current path may bypass the energy storage circuits 1061-106N that did not receive the pre-charge activation signal. It is noted that the energy storage circuit 106n may not receive the pre-charge activation signal in case of a failure in communications. The energy storage circuit 106n may not receive the pre-charge activation signal in case in case the controller 114n have a slower response time to the pre-charge activation signal than controllers 114n of other energy storage circuits 106n.

Examples of algorithms, functions, processes and control of circuits, and systems described herein (e.g., the energy storage circuits 106n, the second circuit 104) may be embodied in hardware control logic and memory (e.g., application specific integrated circuits, field programmable gate arrays) and/or computer-executable instructions executed by one or more computers or other devices (e.g., controllers 114n). The computers and other devices that execute the instructions may include microprocessors, microcontrollers, digital signal processors, embedded controllers, etc. Computer-executable instructions may include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. For example, a power converter, system or device may comprise one or more processors and memory storing computer executable instructions, that when executed by the one or more processors, performs the steps of Figures 14 and/or 18, or any other control function described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.
Clause 1. A circuit comprising:
   a first terminal and a second terminal;
   an energy storage unit;
   a pre-charge circuit, wherein the energy storage unit and the pre-charge circuit are connected in series to form a series connection between the first terminal and the second terminal;
   a sensor configured to detect an electrical characteristic; and
   a control circuit configured to, based on the electrical characteristic indicating that a first polarity of a first voltage between the first terminal and the second terminal is opposite of a second polarity of a second voltage across the energy storage unit, control the pre-charge circuit to close a current path between the first terminal and the second terminal.
Clause 2. The circuit of clause 1, wherein the pre-charge circuit comprises a first switch and a resistor, and
   wherein the first switch is connected in series with the resistor.
Clause 3. The circuit of clause 2, wherein the first switch comprises one of: a metal oxide semiconductor field effect transistor (MOSFET), an insulated-gate bipolar transistor (IGBT), or bipolar junction transistor (BJT).
Clause 4. The circuit of any one of clauses 1-3, wherein the controller is further configured to control the pre-charge circuit based on receiving a signal.
Clause 5. The circuit of clause 4, further comprising a second switch connected to the controller and configured to provide the controller with the signal.
Clause 6. The circuit of clause 5, wherein the second switch comprises one of:
   a mechanical switch;
   an electro-mechanical switch;
   a transistor.
Clause 7. The circuit of any one of clauses 1-6, wherein the first terminal comprises a positive terminal connected to an anode of the energy storage unit, and
   wherein the second terminal comprises a negative terminal connected to the pre-charge circuit.
Clause 8. The circuit of any one of clauses 1-6, wherein the second terminal comprises a negative terminal connected to the cathode of the energy storage unit, and
   wherein the first terminal comprises a positive terminal connected to the pre-charge circuit.
Clause 9. The circuit of any one of clauses 1-8, wherein the electrical characteristic comprises a voltage level between the first terminal and the second terminal.
Clause 10. The circuit of any one of clauses 1-8, wherein the electrical characteristic comprises a current flowing through the one of the first terminal or the second terminal.
Clause 11. The circuit of any one of clauses 1-10, wherein the sensor comprises an opto-coupler, connected between the first terminal and the second terminal, and
   wherein the sensor is configured to detect that the first polarity of the voltage between the first terminal and the second terminal is opposite of the second polarity of a voltage across the energy storage unit.
Clause 12. The circuit of any one of clauses 1-11, further comprising a third switch connected in parallel with the pre-charge circuit,
   wherein the controller is further configured to close the third switch in response to a second signal.
Clause 13. The circuit of any one of clauses 1-12, wherein the controller is further configured to control the pre-charge circuit to open the current path in response to one or more of:
   a third signal;
   a measurement of a voltage between the first terminal and the second terminal; or
   an elapsed time period.
Clause 14. The circuit of any one of clauses 1-13, further comprising a circuitry connected between the first terminal and the second terminal,
   wherein the circuitry comprises a fourth switch connected in series with a second resistor.
Clause 15. The circuit of clause 14, wherein the controller is further configured to control the fourth switch to close a current path between the first terminal and the second terminal prior to connecting the energy storage circuit to another energy storage circuit or to a load, and
   wherein the controller is further configured to control the fourth switch to open the current path between the first terminal and the second terminal prior to controlling the pre-charge circuit to close a current path between the first terminal and the second terminal.
Clause 16. The circuit of any one of clauses 14-15, wherein the fourth switch comprises one of: a metal oxide semiconductor field effect transistor (MOSFET), an insulated-gate bipolar transistor (IGBT), or bipolar junction transistor (BJT).
Clause 17. The circuit of any one of clauses 14-16, wherein the circuitry is further configured to reduce, based on the first switch closing a current path between the first terminal and the second terminal, a voltage between the positive terminal and the negative terminal.
Clause 18. The circuit of any one of clauses 1-17, wherein the energy storage unit comprises one of:
   a battery;
   a capacitor;
   a DC generator; or
   a photovoltaic cell.
Clause 19. The circuit of any one of clauses 1-18, further comprising a first capacitor connected to the first terminal and the second terminal.
Clause 20. The circuit of clause 19, wherein the first capacitor comprises a parasitic capacitor.
Clause 21. The circuit of any one of clauses 1-20, further comprising a second capacitor connected in parallel to the pre-charge circuit.
Clause 22. The circuit of clause 21, wherein the capacitor comprises a parasitic capacitor.
Clause 23. A system comprising:
   a switch; and
   a plurality of energy storage circuits connected in series, wherein each energy storage circuit of the plurality of energy storage circuits comprises:
      a first terminal and a second terminal;
      an energy storage unit;
      a pre-charge circuit, wherein the energy storage unit and the pre-charge circuit are connected in series to form a series connection between the first terminal and the second terminal;
      a sensor configured to detect an electrical characteristic; and
      a control circuit configured to control the pre-charge circuit to close a current path between the first terminal and the second terminal based on one of:
         the electrical characteristic indicating that a first polarity of a first voltage between the first terminal and the second terminal is opposite of a second polarity of a second voltage across the energy storage unit; or
         receiving a signal from the switch.
Clause 24. The system of clause 23, wherein the pre-charge circuit comprises a second switch, connected in series with a resistor.
Clause 25. The system of clause 24, wherein the second switch comprises one of: a metal oxide semiconductor field effect transistor (MOSFET), an insulated-gate bipolar transistor (IGBT), or bipolar junction transistor (BJT).
Clause 26. The system of any one of clauses 23-25, wherein the switch comprises one of:
   a mechanical switch;
   an electro-mechanical switch; or
   a transistor.
Clause 27. The system of any one of clauses 23-26, wherein the first terminal comprises a positive terminal connected to an anode of the energy storage unit, and
   wherein the second terminal comprises a negative terminal connected to the pre-charge circuit.
Clause 28. The system of any one of clauses 23-26, wherein the second terminal comprises a negative terminal connected to the cathode of the energy storage unit, and
   wherein the first terminal comprises a positive terminal connected to the pre-charge circuit.
Clause 29. The system of any one of clauses 23-28, wherein the sensor is configured to measure a voltage level between the first terminal and the second terminal.
Clause 30. The system of any one of clauses 23-28, wherein the sensor is configured to measure a current flowing through the one of the first terminal or the second terminal.
Clause 31. The system of any one of clauses 23-28, wherein the sensor comprises an opto-coupler connected between the first terminal and the second terminal and configured to detect whether the first polarity of a voltage between the first terminal and the second terminal is opposite of the second polarity of a voltage across the energy storage unit.
Clause 32. The system of any one of clauses 23-31, further comprising a third switch connected in parallel with the pre-charge circuit,
   wherein the controller is configured to turn on the third switch in response to a second signal.
Clause 33. The system of any one of clauses 23-32, wherein the controller is configured to control the pre-charge circuit to open the current path based on one of:
   a third signal;
   a measurement of a voltage between the first terminal and the second terminal; or
   an elapsed time period.
Clause 34. The system of any one of clauses 23-33, further comprising a circuitry connected between the first terminal and the second terminal, wherein the circuitry comprises a fourth switch connected in series with a second resistor.
Clause 35. The system of clause 34, wherein the controller is further configured to control the fourth switch to close a current path between the first terminal and the second terminal prior to connecting the energy storage circuit to another energy storage circuit or to a load, and
   wherein the controller is further configured to control the fourth switch to open the current path between the first terminal and the second terminal prior to controlling the pre-charge circuit to close a current path between the first terminal and the second terminal.
Clause 36. The system of any one of clauses 34-35, wherein the fourth switch comprises one of: a metal oxide semiconductor field effect transistor (MOSFET), an insulated-gate bipolar transistor (IGBT), or bipolar junction transistor (BJT).
Clause 37. The system of any one of clauses 34-36, wherein the circuitry is configured to reduce, based on the fourth switch closing a current path between the first terminal and the second terminal, a voltage between the positive terminal and the negative terminal.
Clause 38. The system of any of clauses 23-37, wherein each energy storage circuit of the plurality of energy storage circuits further comprises a first capacitor connected in parallel to the pre-charge circuit, and
   wherein the first capacitor comprises a parasitic capacitor.
Clause 39. The system of any one of clauses 23-38, wherein the energy storage unit comprises one of:
   a battery;
   a capacitor;
   a DC generator; or
   a photovoltaic cell.
Clause 40. The system of any one of clauses 23-38, further comprising a circuit, comprising:
   the switch;
   a third terminal connected to the first terminal;
   a fourth terminal connected to the second terminal; and
   a capacitor connected between the third terminal and the fourth terminal.
Clause 41. The system of any one of clauses 23-40, further comprising a capacitor connected between the first terminal and the second terminal.
Clause 42. The system of clause 41, wherein the capacitor comprises a parasitic capacitor.
Clause 43. The system of any one of clauses 23-40, further comprising a second capacitor connected in parallel to the pre-charge circuit.
Clause 44. The system of clause 41, wherein the second capacitor comprises a parasitic capacitor.
Clause 45. A system comprising:
   a switch; and
   a plurality of energy storage circuits, connected in parallel, wherein each energy storage circuit of the plurality of energy storage circuits comprises:
      a first terminal and a second terminal;
      an energy storage unit;
      a pre-charge circuit, wherein the energy storage unit and the pre-charge circuit are connected in series to form a series connection between the first terminal and the second terminal;
      a sensor configured to detect an electrical characteristic; and
      a control circuit configured to control the pre-charge circuit to close a current path between the first terminal and the second terminal based on one of:
         the electrical characteristic indicating that first polarity of a first voltage between the first terminal and the second terminal is the same of a second polarity of a second voltage across the energy storage unit; or
         receiving a signal from the switch.
Clause 46. A method comprising the steps of:
   detecting, by a sensor, a first polarity of a first voltage between a first terminal and a second terminal of an energy storage circuit; and
   controlling, by a controller and based on the first polarity being opposite of a second polarity of a second voltage across an energy storage unit, a pre-charge circuit to close a current path between a the first terminal and the second terminal.
Clause 47. The method of clause 46, wherein the controlling the pre-charge circuit is further based on a signal received by the controller.
Clause 48. The method of clause 47, further comprising providing, by a first switch, the signal to the controller.
Clause 49. The method of any one of clauses 46-48, further comprising:
   prior to the step of detecting:
   reducing, by the controller, the voltage between the positive terminal and the negative terminal; and
   connecting the energy storage circuit to another energy storage circuit.
Clause 50. The method of clause 49, wherein the reducing comprises controlling, by the controller, a second switch to transition the second switch to a conducting state,
   wherein the second switch is connected in series with a resistor to form a series connection,
   wherein the series connection is connected across the first terminal and the second terminal.
Clause 51. The method of any one of clauses 46-50, further comprising:
   turning off, in response a second signal, a second switch connected in parallel with the pre-charge circuit.
Clause 52. The method of any one of clauses 46-51, wherein controlling the pre-charge circuit is further based on one or more of:
   a second change in the state of the first switch;
   the first voltage between the first terminal and the second terminal exceeding a threshold; or
   an elapsed time period.
Clause 53. A system comprising:
   a plurality of energy storage circuits connected in series, wherein each energy storage circuit of the plurality of energy storage circuits comprises:
   a first terminal and a second terminal;
   an energy storage unit;
   a pre-charge circuit, wherein the energy storage unit and the pre-charge circuit are connected in series to form a series connection between the first terminal and the second terminal;
   a controller configured to, based on receiving a signal, control the pre-charge circuit to close a first current path between the first terminal and the second terminal; and
   a bypass diode, wherein the bypass diode is:
      connected between the first terminal and the second terminal and in parallel to the series connection; and
      configured to, based on a first polarity of a first voltage between the first terminal and the second terminal being opposite of a second polarity of a second voltage across the energy storage unit, close a second current path between the first terminal and the second terminal.
Clause 53. The system of clause 52, wherein, in each of the plurality of energy storage circuits, the pre-charge circuit comprises a switch and a resistor connected in series.
Clause 54. The system of clause 53, wherein, in each of the plurality of energy storage circuits, the switch comprises one of: a metal oxide semiconductor field effect transistor (MOSFET), an insulated-gate bipolar transistor (IGBT), or bipolar junction transistor (BJT).
Clause 55. The system of clause 52, further comprising a switch configured to provide the signal, wherein the switch comprises one of:
   a mechanical switch;
   an electro-mechanical switch; or
   a transistor.
Clause 56. The system of clause 52, wherein, in each of the plurality of energy storage circuits, the first terminal comprises a positive terminal connected to an anode of the energy storage unit; and
   wherein the second terminal comprises a negative terminal connected to the pre-charge circuit.
Clause 57. The system of clause 52, wherein, in each of the plurality of energy storage circuits, the second terminal comprises a negative terminal connected to a cathode of the energy storage unit; and
   wherein the first terminal comprises a positive terminal connected to the pre-charge circuit.
Clause 58. The system of clause 52, wherein each energy storage circuit, of the plurality of energy storage circuits, further comprises a sensor configured to detect an electrical characteristic; and
   wherein, in each of the plurality of energy storage circuits, the controller is configured to control the pre-charge circuit to close the first current path between the first terminal and the second terminal based on the electrical characteristic indicating that the first polarity of the first voltage between the first terminal and the second terminal is opposite of the second polarity of the second voltage across the energy storage unit.
Clause 59. The system of clause 58, wherein the electrical characteristic comprises a voltage level between the first terminal and the second terminal.
Clause 60. The system of clause 58, wherein the electrical characteristic comprises a current flowing through the one of the first terminal or the second terminal.
Clause 61. The system of clause 58, wherein, in each of the plurality of energy storage circuits, the sensor comprises an opto-coupler:
   connected between the first terminal and the second terminal; and
   configured to detect whether the first polarity of the voltage between the first terminal and the second terminal is opposite of the second polarity of the voltage across the energy storage unit.
Clause 62. The system of clause 52, wherein each energy storage circuit, of the plurality of energy storage circuits, further comprises a switch connected in parallel with the pre-charge circuit; and
   wherein, in each of the plurality of energy storage circuits, the controller is configured to turn on the switch in response to a second signal.
Clause 63. The system of clause 52, wherein, in each of the plurality of energy storage circuits, the controller is configured to control the pre-charge circuit to open the current path based on one of:
   a second signal;
   a measurement of a voltage between the first terminal and the second terminal; or
   an elapsed time period.
Clause 64. The system of clause 52, wherein each energy storage circuit of the plurality of energy storage circuits further comprises a capacitor connected in parallel to the pre-charge circuit; and
   wherein the capacitor comprises a parasitic capacitor.
Clause 65. The system of clause 52, further comprising a second circuit, comprising:
   a switch configured to provide the signal;
   a third terminal connected to the first terminal;
   a fourth terminal connected to the second terminal; and
   a capacitor connected between the third terminal and the fourth terminal.
Clause 66. The system of clause 52, wherein, in each of the plurality of energy storage circuits, the first current path is via the pre-charge circuit and the energy storage unit; and
   wherein, in each of the plurality of energy storage circuits, the second path bypasses the pre-charge circuit and the energy storage unit.
Clause 67. A method comprising:
   receiving, by a first controller of a first energy storage circuit of a plurality of energy storage circuits connected in series, a signal;
   controlling, by a first controller of a first energy storage circuit and based on receiving the signal, a pre-charge circuit, of the first energy storage circuit, to close a first current path between a first terminal and a second terminal of the first energy storage circuit and via the pre-charge circuit and a first energy storage unit of the first energy storage circuit; and
   providing, by using a bypass diode of a second energy storage circuit of the plurality of energy storage circuits, a second current path between a first terminal and a second terminal of the first energy storage circuit and via the bypass diode, wherein the second current path bypasses a second energy storage unit of the second energy storage circuit.
Clause 68. The method of clause 67, wherein providing the second current path is further based on a second controller of the second energy storage circuit not receiving the signal.
Clause 69. The method of clause 67, wherein providing the second current path is further based on:
   the first controller of a first energy storage circuit and a second controller of the second energy storage circuit receiving the signal at a same time; and
   the second controller not responding to the signal concurrently with the first controller.
Clause 70. The method of clause 67, wherein providing the second current path is further based on a first polarity of a first voltage between the first terminal and the second terminal of the second energy storage circuit being opposite of a second polarity of a second voltage across the second energy storage unit.
Clause 71. The method of clause 67, wherein the first energy storage unit and the pre-charge circuit are connected in series to form a series connection between the first terminal and the second terminal of the first energy storage circuit; and
   wherein the bypass diode and the second energy storage unit of the second energy storage circuit are connected in parallel between the first terminal and the second terminal of the second energy storage circuit.
Clause 72. A circuit comprising:
   a first terminal and a second terminal;
   an energy storage unit;
   a pre-charge circuit, wherein the energy storage unit and the pre-charge circuit are connected in series to form a series connection between the first terminal and the second terminal;
   a sensor configured to detect an electrical characteristic; and
   a controller configured to, based on the electrical characteristic indicating that a first polarity of a first voltage between the first terminal and the second terminal is opposite of a second polarity of a second voltage across the energy storage unit, control the pre-charge circuit to close a current path between the first terminal and the second terminal.
Clause 73. A system comprising:
   a plurality of energy storage circuits connected in series, wherein each energy storage circuit of the plurality of energy storage circuits comprises:
      a first terminal and a second terminal;
      an energy storage unit;
      a pre-charge circuit, wherein the energy storage unit and the pre-charge circuit are connected in series to form a series connection between the first terminal and the second terminal;
      a bypass diode, connected between the first terminal and the second terminal, configured to close a current path between the first terminal and the second terminal responsive to a first polarity of a first voltage between the first terminal and the second terminal being opposite of a second polarity of a second voltage across the energy storage unit.; and
   a controller configured to control the pre-charge circuit of each of the plurality of energy storage circuits to close a current path between the first terminal and the second terminal responsive to receiving a signal.

## Claims

1. A system comprising:
a plurality of energy storage circuits connected in series, wherein each energy storage circuit of the plurality of energy storage circuits comprises:
a first terminal and a second terminal;
an energy storage unit;
a pre-charge circuit, wherein the energy storage unit and the pre-charge circuit are connected in series to form a series connection between the first terminal and the second terminal;
a controller configured to, based on receiving a signal, control the pre-charge circuit to close a first current path between the first terminal and the second terminal; and
a bypass diode, wherein the bypass diode is:
connected between the first terminal and the second terminal and in parallel to the series connection; and
configured to, based on a first polarity of a first voltage between the first terminal and the second terminal being opposite of a second polarity of a second voltage across the energy storage unit, close a second current path between the first terminal and the second terminal.

2. The system of claim 1, wherein, in each of the plurality of energy storage circuits, the pre-charge circuit comprises a switch and a resistor connected in series.

3. The system of claims 1 or 2, further comprising a switch configured to provide the signal, wherein the switch comprises one of:
a mechanical switch;
an electro-mechanical switch; or
a transistor.

4. The system of any preceding claim, wherein, in each of the plurality of energy storage circuits, the first terminal comprises a positive terminal connected to an anode of the energy storage unit; and
wherein the second terminal comprises a negative terminal connected to the pre-charge circuit.

5. The system of any preceding claim, wherein each energy storage circuit, of the plurality of energy storage circuits, further comprises a sensor configured to detect an electrical characteristic; and
wherein, in each of the plurality of energy storage circuits, the controller is configured to control the pre-charge circuit to close the first current path between the first terminal and the second terminal based on the electrical characteristic indicating that the first polarity of the first voltage between the first terminal and the second terminal is opposite of the second polarity of the second voltage across the energy storage unit.

6. The system of claim 5, wherein the electrical characteristic comprises a voltage level between the first terminal and the second terminal.

7. The system of claim 6, wherein, in each of the plurality of energy storage circuits, the sensor comprises an opto-coupler:
connected between the first terminal and the second terminal; and
configured to detect whether the first polarity of the voltage between the first terminal and the second terminal is opposite of the second polarity of the voltage across the energy storage unit.

8. The system of any preceding claim, wherein each energy storage circuit, of the plurality of energy storage circuits, further comprises a switch connected in parallel with the pre-charge circuit; and
wherein, in each of the plurality of energy storage circuits, the controller is configured to turn on the switch in response to a second signal.

9. The system of any preceding claim, wherein, in each of the plurality of energy storage circuits, the controller is configured to control the pre-charge circuit to open the first current path based on one of:
a second signal;
a measurement of a voltage between the first terminal and the second terminal; or
an elapsed time period.

10. The system of any preceding claim, wherein each energy storage circuit of the plurality of energy storage circuits further comprises a capacitor connected in parallel to the pre-charge circuit; and
wherein the capacitor comprises a parasitic capacitor.

11. The system of any preceding claim, further comprising a second circuit, comprising:
a switch configured to provide the signal;
a third terminal connected to the first terminal;
a fourth terminal connected to the second terminal; and
a capacitor connected between the third terminal and the fourth terminal.

12. The system of any preceding claim, wherein, in each of the plurality of energy storage circuits, the first current path is via the pre-charge circuit and the energy storage unit; and
wherein, in each of the plurality of energy storage circuits, the second path bypasses the pre-charge circuit and the energy storage unit.

13. A method comprising:
receiving, by a first controller of a first energy storage circuit of a plurality of energy storage circuits connected in series, a signal;
controlling, by a first controller of a first energy storage circuit and based on receiving the signal, a pre-charge circuit, of the first energy storage circuit, to close a first current path between a first terminal and a second terminal of the first energy storage circuit and via the pre-charge circuit and a first energy storage unit of the first energy storage circuit; and
providing, by using a bypass diode of a second energy storage circuit of the plurality of energy storage circuits, a second current path between a first terminal and a second terminal of the first energy storage circuit and via the bypass diode, wherein the second current path bypasses a second energy storage unit of the second energy storage circuit.

14. The method of claim 13, wherein providing the second current path is further based on a second controller of the second energy storage circuit not receiving the signal.

15. The method of claim 13, wherein providing the second current path is further based on:
the first controller of a first energy storage circuit and a second controller of the second energy storage circuit receiving the signal at a same time; and
the second controller not responding to the signal concurrently with the first controller.
